## Europäisches Patentamt
## European Patent Office
## Office européen des brevets

(11) Numéro de publication: **0 080 397**
**B1**

(12) **FASCICULE DE BREVET EUROPEEN**

(45) Date de publication du fascicule du brevet: **07.01.87**

(21) Numéro de dépôt: **82402055.6**

(22) Date de dépôt: **09.11.82**

(51) Int. Cl.⁴: **G 01 S 13/52,** G 01 S 13/64, G 01 S 7/06

(54) **Radar Doppler de surveillance terrestre.**

(30) Priorité: **24.11.81 FR 8121958**

(43) Date de publication de la demande:
**01.06.83 Bulletin 83/22**

(45) Mention de la délivrance du brevet:
**07.01.87 Bulletin 87/02**

(84) Etats contractants désignés:
**CH DE GB IT LI NL SE**

(56) Documents cités:
**DE-A-1 523 235**
**FR-A-2 306 453**
**US-A-3 721 980**
**US-A-3 787 848**
**US-A-4 057 800**

(73) Titulaire: **LMT RADIO PROFESSIONNELLE**
**46-47, Quai Alphonse Le Gallo**
**F-92103 Boulogne-Billancourt (FR)**

(72) Inventeur: **Houdard, Charles**
**THOMSON-CSF SCPI 173 bld Haussmann**
**F-75379 Paris Cedex 08 (FR)**
Inventeur: **le Parquier, Guy**
**THOMSON-CSF SCPI 173 bld Haussmann**
**F-75379 Paris Cedex 08 (FR)**

(74) Mandataire: **Desperrier, Jean-Louis et al**
**THOMSON-CSF SCPI 19, avenue de Messine**
**F-75008 Paris (FR)**

Courier Press, Leamington Spa, England.

## Description

La présente invention se rapporte aux radars Doppler de surveillance terrestre qui permettent de repérer des cibles mobiles se déplacant à la surface du sol entre des obstacles naturels qui provoquent des échos fixes.

De manière connue un tel radar Doppler émet des impulsions récurrentes et reçoit ces impulsions après réflexion sur un grand nombre d'obstacles situés dans le champ de balayage de l'antenne d'émission-réception.

Pour localiser les cibles mobiles intéressantes, on effectue un double traitement sur ces signaux. On utilise tout d'abord un système de portes qui découpe le signal reçu dans le temps de manière à discriminer une série de zones réparties de manière régulière dans le champ à surveiller. Dans certains cas très simplifiés on utilise une seule porte qui délimite un créneau de profondeur déterminée que l'opérateur peut déplacer à son choix dans le champ de portée du radar.

On effectue ensuite une analyse fréquentielle sur les signaux provenant d'un ensemble d'impulsions successives pour obtenir un spectre correspondant à un mobile doté d'une vitesse radiale déterminée, et situé dans le secteur correspondant à la porte sélectionnée.

Le signal provenant de l'analyseur de spectre est traité dans un circuit à seuil pour discriminer ce signal du bruit. Le signal de sortie du discriminateur est un signal binaire qui donne pour chaque porte de distance successive un bit d'information dont la valeur indique une détection ou une non détection. Ces signaux sont traités et appliqués à un dispositif de visualisation qui permet de localiser les cibles mobiles ainsi repérées. Cependant parmi les cibles détectées certaines présentent un danger relatif selon la distance à laquelle elles se trouvent et selon la vitesse (radiale) à laquelle elles se déplacent, ces deux critères pouvant être combinés. Les dispositifs de visualisation utilisés pour ce type de radar ne mettant pas en évidence ce danger.

Le document US—A—4 057 800 décrit un radar comportant des circuits permettant de lever des ambiguïtés provoquées par des phénomènes de repliement de spectres d'échos de cibles rapides. Ce radar ne comporte pas de moyens de classement des cibles en fonction de leur vitesse et de leur proximité, ni de moyens de visualisation d'un tel classement.

Le document FR—A—2 306 453 décrit un radar d'indication de cibles mobiles comportant des circuits permettant d'éliminer les échos correspondant à des cibles fixes et à des cibles telles que les vagues, le pluie ou les oiseaux migrateurs. Ce radar ne préconise pas non plus d'effectuer un classement des cibles.

Pour surmonter ces difficultés, l'invention propose un radar Doppler de surveillance terrestre, du type comprenant un émetteur pour émettre des impulsions récurrentes de fréquence déterminée, un récepteur pour recevoir ces impulsions affectées d'un modulation Doppler et délivrer un signal de réception formé d'impulsions vidéo-fréquence porteuses de la même modulation, des moyens de mémorisation et de sélection pour isoler dans ce signal de réception au moins un groupe d'impulsions vidéo-fréquence récurrentes correspondant à une porte de distance déterminée, des moyens d'analyse spectrale pour former à partir de ce groupe d'impulsions un signal indiquant les raies de modulation Doppler des impulsions, un premier circuit à seuil pour discriminer ces raies du bruit, délivrant un signal indiquant la présence ou l'absence de cible mobiles dans les portes de distance et un dispositif de visualisation permettant de localiser les cibles, caractérisé en ce qu'il comprend un dispositif discriminateur permettant de classer les cibles détectées en fonction de leur vitesse dans un ensemble de créneaux de danger relatif prédéterminés, un deuxième circuit à seuil relié au dispositif discriminateur à un circuit synchronisateur et au premier circuit à seuil et délivrant des signaux correspondant à des cibles fixes, mobiles lentes et mobiles rapides respectivement, un circuit de mémorisation mémorisant les signaux de sortie du deuxième circuit à seuil, un circuit de synchronisation et de commande pilotant le circuit de mémorisation, un circuit de commande de balayage commandé par le circuit de synchronisation, un écran fluorescent du type matriciel dont le premier ensemble d'électrodes est commandé par le circuit de commande de balayage, et dont un deuxième ensemble d'électrodes est commandé par le signal de sortie du circuit de mémorisation par l'intermédiaire d'un circuit d'interface et permet ainsi de localiser les cibles et de distinguer celles qui présentent plus de danger par une surbrillance sur l'écran.

Les particularités est avantages de la présente invention apparaitront dans la description qui suit, non limitative se rapportant à un mode de réalisation, et à l'aide des figures annexées qui représentent:

—figure 1, un schéma synoptique d'un radar Doppler der surveillance terrestre conforme à l'invention;

—figure 2, un schéma de réalisation du dispositif discriminateur 9;

—figure 3, un schéma de réalisation du circuit discriminateur à seuil 10;

—figure 4, un schéma de réalisation du circuit de mémorisation 12;

—figure 5, un diagramme des temps des signaux d'horloge.

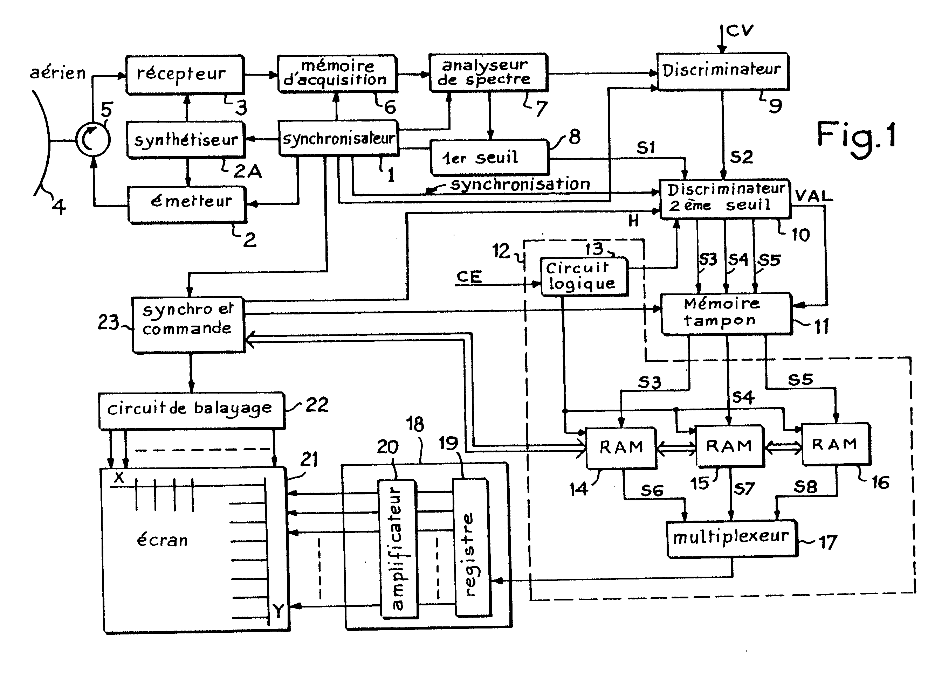

Le radar Doppler dont le schéma synoptique est représenté sur la figure 1, comprend un synchronisateur central 1 pilotant l'ensemble du système. Il comporte également de façon classique un émetteur 2, un synthétiseur 2A, un récepteur 3, un aérien 4 permettant d'envoyer ou de recevoir des signaux par l'intermédiaire d'un circulateur 5.

Le récepteur 3 fournit un signal de démodulation comportant une suite d'impulsions vidéo-fréquence caractéristiques du paysage observé. Il est appliqué à un système d'acquisition et de mémorisation 6 qui a une double fonction:

tout d'abord il sélectionne des créneaux temporels correspondant chacun à une distance déterminée comptée à partir de l'aérien 4. Ceci permet de diviser l'espace à partir de cet aérien en un nombre déterminé n de zones qui sont explorées chacune séparément pour déterminer s'il y a ou non une cible mobile dans une ou plusieurs d'entres-elles.

Ensuite pour chacune de ces zones, il sélectionne, un nombre N d'impulsions de réception correspondant elles-mêmes à N impulsions récurrentes de l'émetteur. Ce nombre permet d'extraire ensuite la fréquence Doppler avec une précision et un rapport signal à bruit suffisant. Pour cela le système d'acquisition et de mémorisation 6 utilise des signaux provenant du synchronisateur 1 et qui permettent de sélectionner les créneaux de durée et le nombre de récurrences. Ce système fonctionne selon un procédé connu dit séquentiel qui permt d'obtenir en sortie la suite des signaux correspondant aux différentes portes de distance et comprenant chacun les N impulsions vidéofréquence correspondant aux N récurrences successives. Ces signaux sont appliqués à l'entrée d'un analyseur de spectre 7 piloté par le circuit de synchronisation 1 et se traduisent en sortie par une série de raies spectrales en plus ou en moins grand nombre pour chacune des portes de distance.

On effectue une première discrimination à l'aide d'un premier circuit à seuil 8 qui reçoit le signal de sortie de l'analyseur 7 et qui permet de donner une réponse par tout ou rien pour chacune des portes de distance. Le traitement jusqu'à ce stade est relativement classique et il se traduit en sortie du circuit à seuil 8 par un signal binaire S1 qui donne pour chacune des portes de distances successives un bit d'information (soit n bit pour n portes) dont la valeur indique une détection ou une non détection.

Un dispositif discriminateur 9 relié à la sortie de l'analyseur de spectre 7 permet de traiter les signaux qu'il reçoit pour obtenir en sortie un signal S2 indiquant une réponse par tout ou rien répondant à un critère de danger relatif prédéterminé et choisi en fonction de la vitesse de la cible et de la distance à laquelle elle se situe. On discrimine ainsi deux créneaux de danger relatif correspondant aux cibles lentes et aux cibles rapides.

Les signaux S1 et S2 issus des circuits 8 et 9 sont reçus à l'entrée du circuit discriminateur à seuil 10 qui reçoit également un signal de synchronisation du synchronisateur 1 lui permettant de prendre en compte ces signaux aux instants significatifs. Le traitement consiste pour chaque porte de distance à additionner les k bits correspondant à k mesures successives et prend comme critère de décision sur la présence d'une cible mobile le fait que la somme ainsi obtenue soit supérieure ou égale à un seuil I compris bien entendu entre 1 et k. Pour décorréler les mesures, on change auparavant de fréquence d'émission entre chacune des k mesures successives. Ce changement de fréquence se fait dans une bande relativement étroite pour que la fréquence Doppler déterminée par l'analyseur de spectre 7 n'ait pas une grande excursion; ceci évite d'avoir à adapter l'analyseur selon la fréquence d'émission.

Une mémoire tampon 11 reçoit le signaux de sortie S3, S4, S5 du circuit discriminateur 10 de manière asynchrone et permet de transmettre ces signaux en synchronisme sur ordre d'un signal de validation VAL du discriminateur 10 à un circuit de mémorisation 12. Cette mémoire est entièrement transparente vis à vis des signaux transmis et n'est utilisée que pour changer leur rythme de transmission.

Le circuit de mémorisation 12 comporte au moins trois mémoires vives 14, 15, 16 de type RAM permettant d'écrire puis de lire les informations contenues respectivement dans les signaux S3, S4, S5 pour les n portes de distance et n valeurs de gisement de l'aérien représentant l'excursion totale en gisement. La mémoire 14 contient le codage de la position des échos fixes détectés dans l'ensemble des portes de distance pour chacune des valeurs du gisement de l'aérien. La mémoire 15 contient le codage de la position des échos mobiles lents détectés dans l'ensemble des portes de distance pour chacune des valeurs du gisement de l'aérien et la mémoire 16 contient le codage de la position des échos mobiles rapides pour chacune des valeurs du gisement de l'aérien. Un circuit logique 13 permet d'inhiber l'entrée d'écriture de la première mémoire sur commande d'un ordre extérieur CE.

Les signaux de sorties S6, S7, S8 de ces mémoires 14, 15, 16 sont reliées aux entrées d'un multiplexeur 17. Les informations relatives à chaque créneau de danger - (cibles fixes, lentes, rapides) sont multiplexées et envoyées à un circuit interface constitué par un registre à décalage 19 série-parallèle, et un ensemble d'amplificateurs 20 permettant d'amplifier les signaux transmis par le registre et de les envoyer sur les électrodes Y correspondant aux anodes d'un écran 21. L'écran 21 est un écran fluorescent du type graphique matriciel. Il comporte donc classiquement un ensemble de n électrodes X matérialisant le gisement de l'aérien, constituées par des grilles de contrôle et en ensemble de n électrodes Y matérialisant les portes de distance, constituées par des pastilles de phosphore. Les électrons émis par une cathode sont accélérés et contrôlés par les grilles et bombardent les pastilles de phosphore.

Un circuit de commande de balayage 22 qui est piloté par un circuit de synchronisation et de commande 23 envoie des signaux de balayage de l'écran qui sont appliqués sur les électrodes X en synchronisme avec le changement des informations sur les électrodes Y.

Le signal S6 contient les informations contenues dans les signaux S7 et S8. Si bien que lorsque l'écran reçoit une information relative au signal S6, puis au signal S7, puis au signal S8, la deuxième image représentant les échos fixes et les échos mobiles, la deuxième image représentant les échos mobiles lents et la troisième représentant les échos mobiles rapides, une surbrillance apparait pour les échos mobiles lents et rapides car ils sont contenus respectivement dans les signaux S6, S7 et S6, S8. Si de plus on envoie le signal S8 deux fois alors que le signal S7 n'est envoyé qu'une fois à l'aide du multiplexeur 17 alors on voit apparaitre 3 niveaux de brillance au lieu de 2 per mettant de distinguer les 3 créneaux de danger.

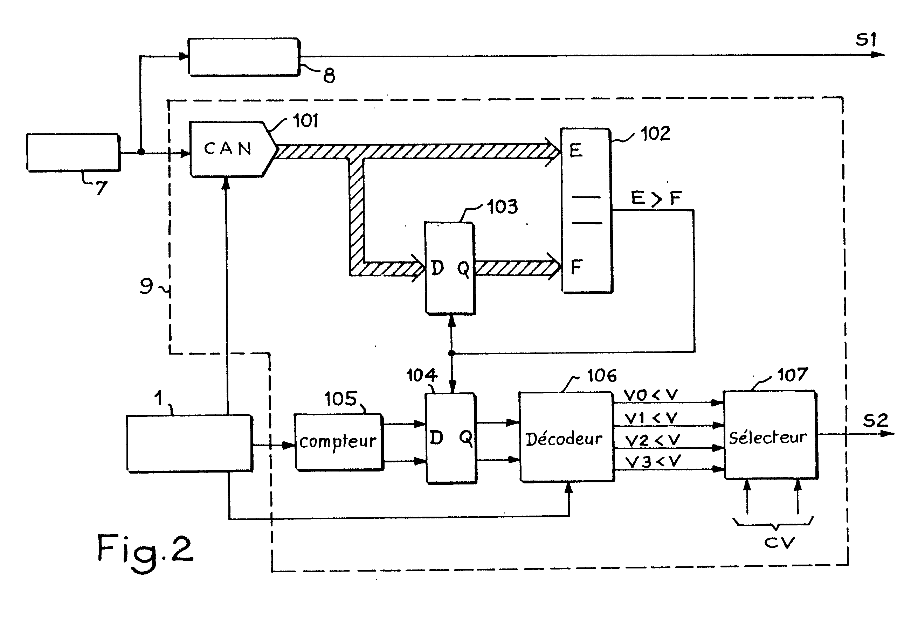

Un exemple de réalisation du dispositif discriminateur 9 est représenté sur la figure 2. Ce dispositif permet tout d'abord de classer les cibles en fonction de leur vitesse. Des seuils de vitesse sont déterminés à partir de fréquences Doppler limites découpant ainsi le spectre du signal bruité reçu, en intervalles. Dans notre réalisation particulière le nombre de fréquences limite est de 5 fréquences d'ou 4 intervalles et par conséquent 4 seuils de vitesses. Pour déterminer la fréquence Doppler détectée on compare deux à deux l'amplitude du signal pour chaque fréquence. Pour cela ce circuit reçoit le signal de sortie de l'analyseur 7. Un convertisseur analogique-numérique 101 numérise les informations transmises pour chaque porte de distanc, transmet chaque mot d'une part à une entrée E d'un comparateur 102 tandis que une autre entrée F reçoit le mot précédent concernant la même porte et qui a été stocké à l'aide d'un ensemble de bascules 103 de type D.

La sortie du comparateur est activée tant que E>F. Cette sortie active (lorsque E>F) l'horloge des bascules 103 qui libèrent la nouvelle doppée.

Lorsque E<F, les bascules stockent le mot présent à l'entrée F. Pendant ce temps un compteur 105 dont le démarrage est synchronisé avec l'envoi du premier mot pour chaque porte de distance, compte de 0 à z. Dans notre réalisation z=4, le comptage se fait bien sûr sur 2 bits et chaque bit est envoyé à l'entrée de donnée d'une bascule de type D dont le boîtier est référence 104. L'horloge de ces bascules 104 est activée par la sortie du comparateur 102 lorsque E<F. Pour la première donnée le compteur affichera 0 et pour la quatrième, le compteur affichera . Mais la sortie des bascules 104 affichera le dernier mot stocké. La sortie des bascules 104 est appliquée à l'entrée d'un décodeur 106 qui permet ainsi de décoder 4 niveaux de vitesse V>V0, V>V1, V>V2, V>V3 et d'afficher le niveau correspondant à la donnée mémorisée par les bascules 105. Les 4 sorties du décodeur sont appliquées aux entrées d'un sélecteur 107 qui reçoit par ailleurs sur ses entrées de sélection une commande extérieure CV faisant ainsi intervenir un critère de danger relatif en prenant en compte la distance à laquelle se trouve la cible détectée, et permettant de sélectionner une des quatre entrées en sortie.

Par exemple si l'entrée V>V1 est à "1" et que la commande CV sélectionne cette entrée, la sortie sera à "1". Par contre si la commande CV a sélectionné l'une des entrées V>V2 ou V>V3 alors que c'est l'entrée V>V1 qui est à "1", la sortie sera à 0. Le signal de sortie S2 est constitué d'un bit par porte de distance traduisant si la cible est très dangereuse ou moyennement dangereuse selon qu'elle est rapide ou lente.

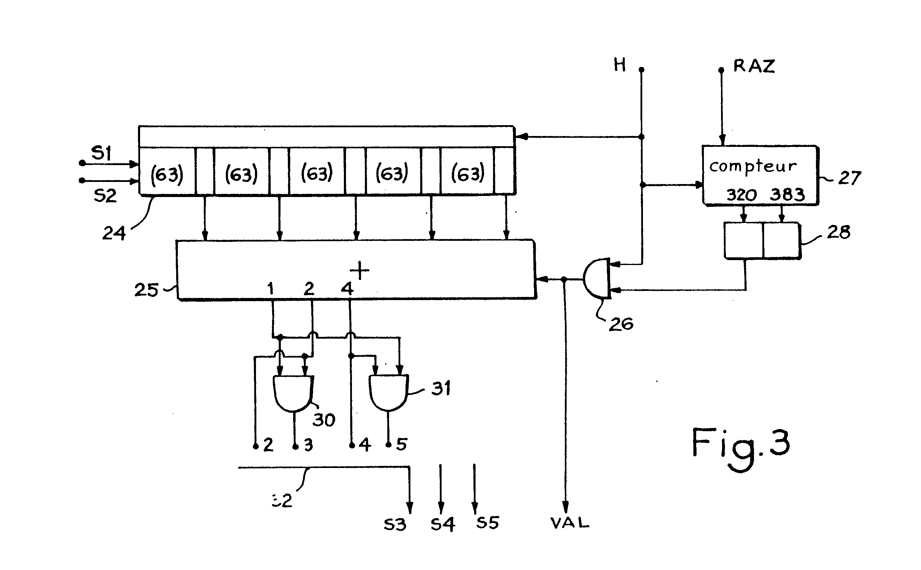

Un exemple de réalisation du circuit discriminateur à seuil 10 est représenté sur la figure 3 dans le cas particulier d'un radar comportant 64 portes de distances et une analyse portant sur cinq mesures indépendantes successives. L'excursion en gisement se fait par pas constant correspondant au pouvoir discrimination de l'aérien, le nombre de pas étant égal à 64.

Le circuit à seuil 10 comporte un registre à décalage 24 qui prend en compte les signaux S1 et S2. Ce registre 24 possède 320 étages correspondant aux cinq mesures successives portant sur 64 portes de distance. Ce registre se remplit avec le signal S1 puis avec le signal S2 sous l'action d'un signal d'horloge H provenant du circuit de synchronisation et de commande 23.

Cinq étages de ce registre à décalage, situés tous les 64 étages à partir du $64^{ième}$, sont munis d'une sortie indépendante. Ainsi quand le registre sera entièrement rempli, on disposera sur ces cinq étages particuliers des cinq bits correspondants aux cinq mesures indépendantes de la première porte de distance. Au temps d'horloge suivant, on disposera dans ces cinq registres des cinq bits correspondant à la deuxième porte de distance, et ainsi de suite jusqu'aux cinq bits correspondant à la $64^{ième}$ porte de distance.

Ces cinq sorties sont raccordées à un sommateur 25 qui effectue l'addition en binaire et donne donc le résultat sur trois bits de sortie en parallèle. Bien entendu dans ce cas particulier ces trois bits de sortie ne peuvent prendre qu'un nombre d'états limité à la représentation du nombre cinq.

Pour que ce sommateur ne fonctionne qu'aux instants significatifs, il reçoit l'horloge H par l'intermédiaire d'une porte "ET" 26 qui n'est ouverte qu'entre les temps 320 à 383 du signal d'horloge H, le temps 1 de ce signal marquant l'entrée du premier bit dans le premier étage du registre 24.

Ce signal d'horloge est appliqué à un compteur 27 qui reçoit par ailleurs depuis le bloc de synchronisation 23 un signal de remise à zéro RAZ lors de l'arrivée du premier bit de S1 dans le registre 24. La sortie 320 de ce compteur positionne une bascule 28 du type RS qui ouvre alors la porte 26. Au temps 383 du signal H le compteur 27 repositionne la bascule 28 qui elle-même referme alors la porte 26.

Les sorties binaires 1, 2, 4 de l'additionneur 25 sont combinées à l'aide de deux portes "ET" 30 et 31 afin d'obtenir d'une part directement, et d'autre part par l'intermédiaire de ces portes, quatre sorties 2, 3, 4, 5. L'apparition d'un bit 1 sur l'une de ces sorties indique dans la porte de distance correspondant à l'instant de calcul un nombre de détection de cibles mobiles parmi les cinq mesures indépendantes égal au numéro de la sortie.

Un commutateur 32 permet de sélectionner celle des sorties qui correspond au seuil que l'on s'est fixé. L'apparition d'un bit 1 sur le signal S3 en sortie de ce commutateur indique donc la détection d'une cible mobile avec le niveau de probabilité sélectionné par le commutateur. La sortie 1 de l'additionneur 25 n'est pas reportée sur le commutateur 32 puisque dans ce cas le deuxième circuit à seuil serait sans intérêt.

Après ce premier traitement le registre prend en compte le signal S2 et effectue le même traitement. L'apparition d'un bit 1 sur le signal S4 en sortie de ce commutateur indique la détection d'une cible mobile lente et l'apparition d'un bit 1 sur le signal S5 indique la détection d'une cible mobile rapide.

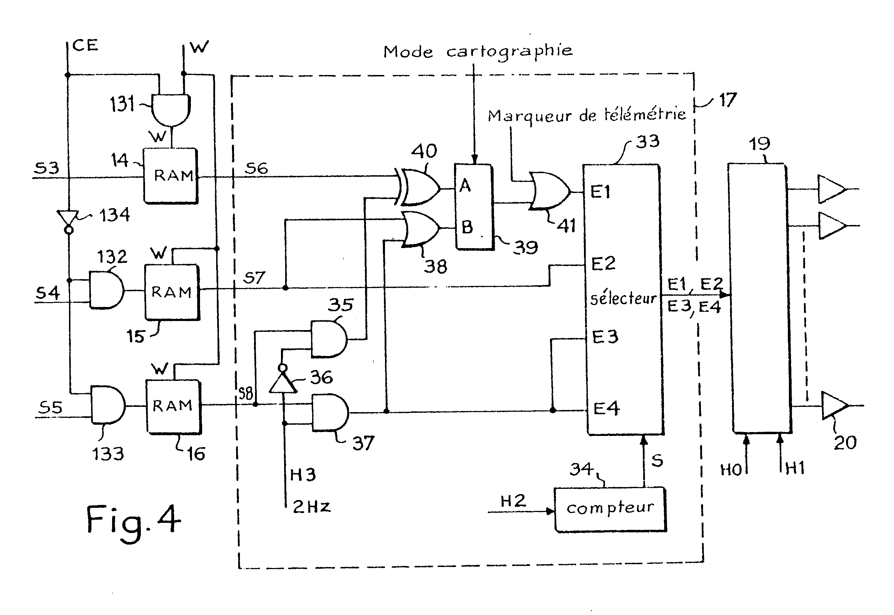

La mémoire tampon 11 mémorise les 64 mots de 3 bits correspondant aux 64 portes et les libère en synchronisme avec les signaux de balayage sur ordre du signal VAL. Le premier bit mémorisé est envoyé vers la mémoire 14, le deuxième est envoyé vers la mémoire 15, le troisième est envoyé vers la mémoire 16 et ainsi de suite pour les 64 mots. Le circuit de mémorisation 12, qui est représenté sur la figure 4 comporte dans cette réalisation particulière 3 mémoires vives 14, 15 et 16 ayant chacune une capacité correspondant au format de l'écran, soit 64×64 bits le codage d'un point de l'écran se faisant sur 1 bit. Le circuit de synchronisation et de commande gère les opérations de lecture et d'écriture dans ces mémoires. Il adresse les 3 mémoires en même temps.

Le circuit logique 13 représenté sur la figure 1 et dont une réalisation particulière est représentée sur la figure 4 comporte une porte "ET" 131 dont une première entrée est reliée à une commande extérieure CE permettant de demander un relevé d'échos fixe nécessaire lors de l'utilisation de radar Doppler car ceux-ci ne permettant en fonctionnement normal que de détecter des échos mobiles. Une deuxième entrée de la porte 131 reçoit la commande d'écriture W envoyée par le circuit 23. La sortie de la porte 131 est reliée à l'entrée d'écriture de la mémoire 14 (recevant le signal S3). Deux autres portes "ET" 132 et 133 reliées respectivement aux mémoires 15 et 16 reçoivent sur une entrée le signal CE au moyen d'une porte inverseuse 134 et reçoivent sur l'autre entrée respectivement les signaux S4 et S5. Le contenu de la mémoire 14 est donc protégé pendant tout le temps que le signal CE est présent.

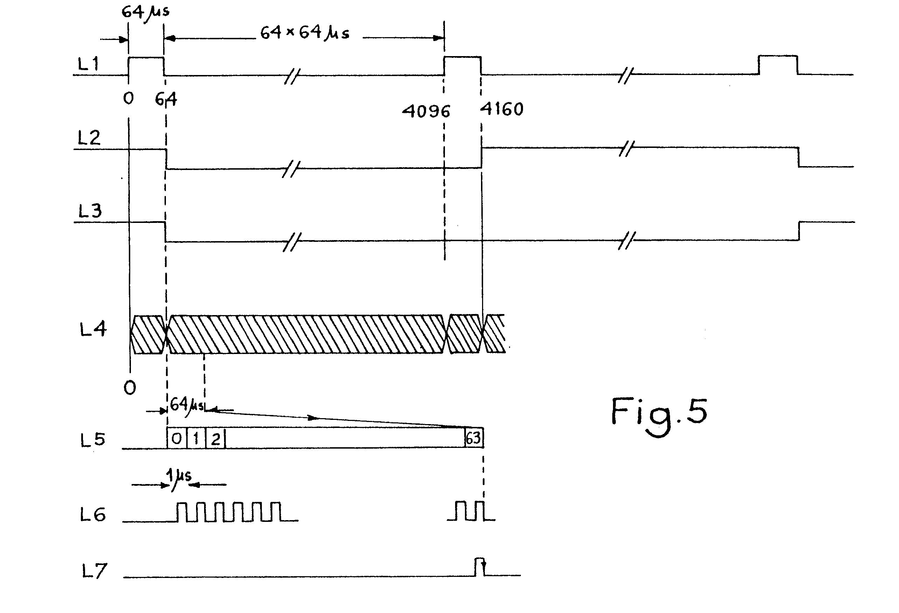

Le multiplexeur 17 représenté sur la figure 4 comprend un ensemble de portes logiques qui sont combinées pour délivrer trois signaux appliqués aux entrées d'un sélecteur 33 permettant de sélectionner une sortie parmi quatre à l'aide d'un compteur 34. Une première porte "ET" 35 reçoit à une entrée le signal de sortie de la mémoire 16 contenant les informations sur 64 bits de détection de cibles rapides dans les 64 portes de distance. Cette porte 35 reçoit d'autre part à une deuxième entrée un signal d'horloge H3 (calée sur une fréquence voisine de 2Hz) par l'intermédiaire d'un inverseur 36. Le signal de sortie de cette mémoire 16 est également appliqué à une entrée d'une deuxième porte "ET" 37 qui reçoit sur une autre entrée le signal d'horloge H3. La sortie de cette porte 37 est reliée à deux entrées E3, E4 du sélecteur 33. Le signal de sortie de la mémoire 15 est appliquée à une entrée d'une porte "OU" 38 et à une entrée E2 du sélecteur 33. Une autre entrée de cette porte 38 reçoit le signal de sortie de la porte 37. La sortie de cette porte 38 est appliquée à une entrée B d'un autre sélecteur 39 permettant de sélectionner une porte parmi deux. Ce sélecteur 39 reçoit d'autre part sur une autre entrée A le signal de sortie d'une porte "NON-ET" 40 dont une entrée reçoit le signal de sortie de la mémoire 14, et l'autre reçoit le signal de sortie de la porte 38. Le sélecteur 39 est activé par une commande extérieure sélectionnant le mode dit "cartographie" de représentation des échos fixes qui permet de prendre en compte le signal correspondant à la détection de cibles fixes afin de visualiser le paysage radar sur l'écran. La sortie du sélecteur 39 est reliée à une entrée d'une porte "OU" 41, une autre entrée de cette porte reçoit un signal issu d'une commande extérieure envoyée par un marqueur de télémétrie. Cette port "OU" 41 permet de superposer à l'image une croix matérialisant le marqueur de télémètrie. La sortie de la porte 41 est reliée à l'entrée E1 du sélecteur 33. Le signal de sortie de ce sélecteur 33 comporte donc des données en série de 64 bits, chaque bit donnant une indication de présence ou d'absence pour chaque porte de distance. L'entrée S de sélection du sélecteur 33 est activée par compteur 34 piloté par le signal H2 et permet d'obtenir à la sortie la donnée de 64×64 bits en série qui était présente à l'entrée E1, puis à l'entrée E2, puis à l'entrée E3, puis à l'entrée E4 conformément au diagramme des temps représenté sur la figure 5.

Le registre à décalage 19 se remplit à la fréquence HO avec les 64 premiers bits correspondant à la sélection de la première colonne sur l'écran, et libère ces bits en parallèle sur une impulsion d'horloge H1 en 64 µs puis reitère pour les colonnes. Ces données sont amplifiées et sont appliquées sur les électrodes Y. Le circuit de balayage envoie un signal qui balaie les 64 électrodes X pendant un temps égal à 64 périodes d'horloge H1. Les points (X, Y) de l'écran sélectionnés s'éclairent et la première image représente le paysage radar avec les échos fixes et mobiles. La deuxième représente les échos mobiles lents, la troisième et la quatrième représente les échos mobiles rapides.

Les échos fixes sont donc allumés une fois sur quatre, les échos mobiles lents sont allumés deux fois sur quatre et les échos mobiles rapides sont allumés trois fois sur quatre. Le signal d'horloge à 2 Hz envoyé sur les portes "ET" 35 et 37 permet d'inhiber le signal de sortie du sélecteur 33 lorsque les entrées E3 et E4 sont sélectionnées conformément au diagramme des temps représentés sur la figure 5. En effet toutes les 500 ms et pendant 250 ms le signal de visualisation des cibles mobiles rapides n'est pas transmis à l'écran ceci afin de provoquer en plus de la surbrillance, un scintillement visible à l'oeil pour mieux repérer les cibles présentant le plus de danger.

Le diagramme des temps représenté sur la figure 5 permet de synthétiser le fonctionnement du circuit de mémorisation 12.

— La première ligne L1 représente le cycle d'écriture et de lecture des mémoires. Dans notre réalisation particulière la durée de l'écriture est de 64 µs, et la durée de la lecture est de 4096 µs.
— La deuxième ligne L2 représente l'horloge H2 c'est-à-dire le cycle d'affichage d'un seul signal de sortie du selecteur 33 soit 4160 µs.
— la troisième ligne L3 représente le cycle d'affichage des 4 signaux de sortie du sélecteur soit la fréquence image de l'écran (4×4160 µs) qui est d'environ 60 Hz.
— la quatrième ligne L4 représente le cycle du bus d'adressage des mémoires 14, 15, 16.
— la ligne L5 représente le comptage des 64 premiers bits.
— la ligne L6 représente l'horloge HO de 1 MHz.
— la ligne L7 représente l'horloge H1 de période 64 µs permettant de valider les sorties du registre 19.

Un tel dispositif permet d'améliorer les conditions de visualisation lors de l'utilisation d'un radar Doppler de surveillance terrestre au prix d'une complication très minime du matériel.

**Revendications**

1. Radar Doppler de surveillance terrestre, du type comprenant un émetteur (2) pour émettre des impulsions récurrentes de fréquence déterminée, un récepteur (3) pour recevoir ces impulsions affectées d'une modulation Doppler et délivrer un signal de réception formé d'impulsions vidéo-fréquence-porteuses de la même modulation, des moyens de mémorisation et de sélection (6) pour isoler dans ce signal de réception au moins un groupe d'impulsions vidéo-fréquence récurrentes correspondant à une porte de distance déterminée, des moyens d'analyse spectrale (7) pour former à partir de ce groupe d'impulsions un signal indiquant les raies de modulation Doppler des impulsions, un premier circuit à seuil (8) pour discriminer ces raies du bruit et délivrer un signal $(S_1)$ indiquant la présence ou l'absence de cibles mobiles dans les portes de distance et un dispositif de visualisation (21) permettant de localiser les cibles, caractérisé en ce qu'il comprend un dispositif discriminateur (9) permettant de classer les cibles détectées en fonction de leur vitesse dans un ensemble de créneaux de danger relatif prédéterminés, un deuxième circuit à seuil (10) relié au dispositif discriminateur (9) à un circuit synchronisateur (1), et au premier circuit à seuil (8) et délivrant des signaux correspondant à des cibles fixes $(S_3)$, mobiles lentes $(S_4)$ et mobiles rapides $(S_5)$ respectivement, un circuit de mémorisation (12) mémorisant les signaux de sortie du deuxième circuit à seuil (10), un circuit de synchronisation et de commande (23) pilotant le circuit de mémorisation, un écran fluorescent du type matriciel (21) dont un premier ensemble d'électrodes (X) est commandé par un circuit de commande de balayage (22) lui-même commandé par le circuit de synchronisation (23), et dont un deuxième ensemble d'électrodes (Y) est commandé par le signal de sortie du circuit de mémorisation (12) ce qui permet ainsi de localiser les cibles et de distinguer celles qui présentent plus de danger par une surbrillance et un scintillement sur l'écran (21).

2. Radar Doppler de surveillance terrestre selon la revendication 1, caractérisé en ce que le dispositif discrimination (9) comporte un convertisseur analogique numérique (101) recevant le signal de sortie de l'analyseur de spectre (7), et délivrant un signal numérique appliqué à une première entrée (E) d'un comparateur (102), dont une deuxième entrée (F) reçoit le signal numérique précédent stocké dans une bascule de type D (103), ce comparateur délivrant un signal permettant d'activer un discriminateur de vitesse (105, 104, 106) à z niveaux de sortie (z entier supérieur ou égal à 2), chacun étant relié à une entrée d'un sélecteur (107) permettant de sélectionner un niveau parmi z selon un critère de danger prédéterminé.

3. Radar Doppler de surveillance terrestre selon la revendication 2, caractérisé en ce que le discriminateur de vitesse (105, 104, 106) comprend un compteur par z (105) dont la sortie est appliquée à l'entrée d'une bascule de type D (104) recevant sur son entrée d'horloge le signal de sortie du comparateur (102), et dont la sortie est appliquée à l'entrée d'un décodeur (106) délivrant z niveaux correspondant à z seuils de vitesse.

4. Radar Doppler de surveillance terrestre selon l'une quelconque des revendications 1 à 3, caractérisé en ce que le deuxième circuit à seuil (10) comprend un registre à décalage (24) permettant de mémoriser k informations successives et délivrant sur k sorties en parallèle les k premiers éléments binaires correspondant à une porte de distance, et que le deuxième circuit à seuil (10) comprend un additionneur (25) permettant de mémoriser ces k premiers éléments binaires, des moyens de synchronisation (26, 28) pour commander le remplissage du registre à décalage et l'additionneur, et des moyens (30, 31) pour sélectionner une sortie de l'additionneur comprise entre 3 et k et délivrer le signal binaire.

5. Radar Doppler de surveillance terrestre selon l'une quelconque des revendications 1 à 4, caractérisé en ce que le circuit de mémorisation (12) comporte un ensemble de mémoires vives (14, 15, 16) dont la capacité est fonction des dimensions de l'écran, et contenant chacune les informations relatives à un créneau de danger pour n portes de distance et n valeurs de gisement de l'aérien, un multiplexeur (17) recevant séquentiellement les informations en parallèle relatives à chaque créneau de danger et délivrant ces informations en série pour chaque créneau de danger.

6. Radar Doppler de surveillance terrestre selon la revendication 5, caractérisé en ce que le nombre de créneaux de danger est au moins égal à 3 et en ce que alors le nombre de mémoire vives (14, 15, 16) est au moins égal à 3.

7. Radar Doppler de surveillance terrestre selon les revendications 4 et 5, caractérisé en ce que le multiplexeur (17) comprend une première porte "ET" (35) dont une entrée est reliée à la sortie d'une première mémoire (16), l'autre entrée étant reliée à une horloge (H3) par l'intermédiaire d'une porte inverseuse (36), une deuxième porte "ET" (37) dont une entrée est également reliée à la sortie de la première mémoire (16) et dont l'autre entrée est reliée à l'horloge (H3), une porte "NON-ET" (40) dont une entrée est reliée à la sortie d'une deuxième mémoire (14) et dont l'autre entrée est reliée à la sortie de la première porte "ET" (35), une première porte "OU" (38) dont une entrée est reliée à la sortie de la troisième mémoire (15) et dont l'autre entrée est reliée à la sortie de la deuxième porte "ET" (37), la sortie de chaque porte "NOR" (40) et "OU" (38) étant reliée à une entrée (A, B) d'un premier sélecteur (39) dont la sortie est reliée à une première entrée (E1) d'un deuxième sélecteur (33) par l'intermédiaire d'une deuxième porte "OU" (41), une deuxième entrée (E2) du deuxième sélecteur (33) étant reliée à la sortie de la troisième mémoire (15) et une troisième et quatrième entrées sont reliées à la sortie de la deuxième porte "ET", la sortie de ce sélecteur (33) étant reliée à l'entrée du registre à décalage (19).

8. Radar Doppler de surveillance terrestre selon la revendication 5, caractérisé en ce que le circuit de mémorisation (12) comprend un circuit logique permettant d'inhiber l'entrée d'écriture d'une mémoire vive (14) sur ordre d'une commande extérieure (CE).

9. Radar Doppler de surveillance terrestre selon l'une quelconque des revendications 1 à 8, caractérisé en ce qu'il comporte un circuit interface (18) comprenant un registre à décalage (19) se remplissant avec n bits arrivant en série et délivrant ces n bits en parallèle, et un ensemble de n amplificateurs reliés chacun à une sortie du registre (19) pour adapter le signal appliqué sur chaque électrode (Y) du deuxième ensemble.

10. Radar Doppler de surveillance terrestre selon l'une quelconque des revendications 1 à 9, caractérisé en ce qui un mémoire tampon (11) relie le discriminateur à seuil (10) aux mémoires (14, 15, 16) afin d'effectuer un changement de vitesse des informations d'entrée.

**Patentansprüche**

1. Doppler-Radar zur Bodenüberwachung, mit einem Sender (2) zum Aussenden regelmäßiger Impulse gegebener Frequenz, mit einem Empfänger (3) zum Empfang dieser Doppler-modulierten Impulse und zur Ausgabe eines Empfangssignals in Form von Videofrequenzimpulsen, die dieselbe Modulation tragen, mit Speicher- und Selektionsmitteln (6), um in diesem Empfangssignal mindestens eine Gruppe von regelmäßigen Videofrequenzimpulsen entsprechend einem Fenster gegebener Entfernung zu isolieren, mit Spektralanalysemitteln (7), um aus dieser Gruppe von Impulsen ein Signal zu bilden, das die Dopplermodulationsfrequenz der Impulse angibt, mit einem ersten Schwellenkreis (8), um diese Frequenzen vom Rauschen zu unterscheiden und ein Signal ($S_1$) anzugeben, das das Vorhandensein oder Nichtvorhandensein beweglicher Ziele in den Entfernungsfenstern angibt, und mit einer Anzeigevorrichtung zur Lokalisierung der Ziele, dadurch gekennzeichnet, daß weiter vorhanden sind eine Diskriminationsvorrichtung (9), die eine Klassifizierung der entdeckten Ziele abhängig von ihrer Geschwindigkeit in einer Gruppe von vorgegebenen Kanälen relativer Gefahr erlaubt, ein zweiter Schwellenkreis (10), der an die Diskriminationsvorrichtung (9), an einen Synchronisierkreis (1) und an den ersten Schwellenkreis (8) angeschlossen ist und Signale entsprechend festen Zielen ($S_3$), langsam beweglichen Zielen ($S_4$) und rasch beweglichen Zielen ($S_5$) liefert, ein Speicherkreis (12), der die Ausgangssignale des zweiten Schwellenkreises (10) speichert, ein Synchronisations- und Steuerkreis (23), der den Speicherkreis überwacht, ein fluoreszierender Bildschirm vom Matrixtyp (21) mit einer ersten Gruppe von Elektroden (X), die von einem Abtaststeuerkreis (22) und dieser wiederum vom Synchronisationskreis (23) gesteuert wird, und mit einer zweiten Gruppe von Elektroden (Y), die vom Ausgangssignal des Speicherkreises (12) gesteuert wird, so daß es möglich ist, die Ziele zu lokalisieren und diejenigen durch eine Überhelligkeit oder ein Blinken auf dem Bildschirm herauszustellen, die die größte Gefahr darstellen.

2. Doppler-Radar zur Bodenüberwachung nach Anspruch 1, dadurch gekennzeichnet, daß die Diskriminationsvorrichtung (9) einen Analog-Digitalwandler (101) aufweist, der das Ausgangssignal des Spektralanalysators (7) zugeführt erhält und eine digitales Signal liefert, das an einen ersten Eingang (E) eines Komparators (102) angelegt wird, dessen zweiter Eingang (F) das vorhergehende und in einer Kippstufe vom D-Typ (103) gespeicherte digitale Signal zugeführt erhält, und daß dieser Komparator ein Signal liefert, das die Aktivierung eines Geschwindigkeitsdiskriminators (105, 104, 106) mit z Ausgangspegeln erlaubt (z ist eine ganze Zahl größer 1), wobei jeder Ausgangspegel an einen Eingang eines Wählers (107) angeschlossen ist, der die Auswahl eines der z Pegel gemäß einem vorgegebenen Gefahrenkriterium erlaubt.

3. Doppler-Radar zur Bodenüberwachung nach Anspruch 2, dadurch gekennzeichnet, daß der Geschwindigkeitsdiskriminator (105, 104, 106) einen Zähler der Kapazität z (105) aufweist, dessen Ausgang an den Eingang eines Kippstufe vom D-Type (104) angelegt ist, die an ihrem Takteingang das Ausgangssignal des Komparators (102) empfängt und deren Ausgang an den Eingang eines Dekodierers (106) angelegt ist, welcher z Pegel entsprechend z Geschwindigkeitsschwellen liefert.

4. Doppler-Radar zur Bodenüberwachung nach einem beliebigen der Ansprüche 1 bis 3, dadurch gekennzeichnet, daß der zweite Schwellenkreis (10) ein Schieberegister (24) aufweist, in dem k aufeinanderfolgende Informationen gespeichert werden können und das an k parallelen Ausgängen die k erste Binärelemente entsprechend einem Entfernungsfenster liefert, und daß der zweite Schwellenkreis (10) einen Addierer (25), der diese k ersten Binärelemente zu speichern vermag, Synchronisationsmittel (26, 28) zur Steuerung des Füllens des Schieberegisters und zur Steuerung des Addierers und Mittel (30, 31) zur Auswahl eines der Ausgänge 2 bis k des Addierers und zur Ausgabe des Binärsignals aufweist.

5. Doppler-Radar zur Bodenüberwachung nach einem beliebigen der Ansprüche 1 bis 4, dadurch gekennzeichnet, daß der Speicherkreis (12) eine Gruppe von aktiven Speichern (14, 15, 16) aufweist, deren Kapazität von den Dimensionen des Bildschirms abhängt und die je die einen Gefahrenkanal betreffenden Informationen für n Entfernungsfenster und n Elevationswerte betreffen, wobei ein Multiplexer (17) nacheinander die parallelen Informationen bezüglich jedes Gefahrenkanals empfängt und diese Informationen in Reihe für jeden Gefahrenkanal ausgibt.

6. Doppler-Radar zur Bodenüberwachung nach Anspruch 5, dadurch gekennzeichnet, daß die Anzahl der Gefahrenkanäle mindestens gleich 3 ist und daß somit die Anzahl der Aktivspeicher (14, 15, 16) ebenfalls mindestens gleich 3 ist.

7. Doppler-Radar zur Bodenüberwachung nach den Ansprüchen 4 und 5, dadurch gekennzeichnet, daß der Multiplexer (17) ein erstes UND-Tor (35) mit einem ersten Eingang, der an den Ausgang eines ersten Speichers (16) angeschlossen ist, und mit einem zweiten Eingang, der an einen Taktgeber (H3) über ein Inverter-Tor (36) angeschlossen ist, ein zweites UND-Tor (37) mit einem Eingang, der ebenfalls an den Ausgang der ersten Speichers (16) angeschlossen ist, und mit einem zweiten Eingang, der an einen Taktgeber (H3) angeschlossen ist, ein NICHT-UND-Tor (40) mit einem Eingang, der an den Ausgang eines zweiten Speichers angeschlossen ist, und mit einem zweiten Eingang, der an den Ausgang des ersten UND-Tores (35) angeschlossen ist, ein erstes ODER-Tor (38) mit einem Eingang, der an den Ausgang des dritten Speichers (15) angeschlossen ist, und mit einem zweiten Eingang, der mit dem Ausgang des zweiten UND-Tores (37) verbunden ist, wobei die Ausgänge des NICHT-UND-Tores (40) und des ODER-Tores (38) je mit einem Eingang (A, B) eines ersten Selektors (39) verbunden sind, dessen Ausgang an einen ersten Eingang (E1) eines zweiten Selektors (33) über ein zweites ODER-Tor (41) führt, und wobei ein zweiter Eingang (E2) des zweiten Selektors (33) mit dem Ausgang des dritten Speichers (15) und ein dritter und vierter Eingang mit dem Ausgang des zweiten UND-Tores verbunden sind, während der Ausgang dieses Selektors (33) an den Eingang des Schieberegisters (19) führt.

8. Doppler-Radar zur Bodenüberwachung nach Anspruch 5, dadurch gekennzeichnet, daß der Speicherkreis (12) einen Logikkreis aufweist, der den Schreibeingang eines Aktivspeichers (14) aufgrund eines von außen kommenden Befehls (CE) zu blockieren vermag.

9. Doppler-Radar zur Bodenüberwachung nach einem beliebigen der Ansprüche 1 bis 8, dadurch gekennzeichnet, daß es einen Schnittstellenschaltkreis (18) mit einem Schieberegister (19) aufweist, das sich mit n in Reihe kommenden Bits füllt und das diese n Bits parallel abgibt, und daß weiter eine Gruppe von n Verstärkern vorgesehen ist, die je an einen Ausgang des Registers (19) zur Anpassung des an jede Elektrode (Y) der zweiten Elektrodengruppe angelegten Signals angeschlossen sind.

10. Doppler-Radar zur Bodenüberwachung nach einem beliebigen der Ansprüche 1 bis 9, dadurch gekennzeichnet, daß ein Pufferspeicher (11) den Schwellendiskriminator (10) mit den Speichern (14, 15, 16) verbindet, um eine Geschwindigkeitsänderung der Eingangsinformationen durchzuführen.

## Claims

1. A ground surveillance Doppler radar of the type comprising a transmitter (2) for transmitting recurrent pulses of a given frequency, a receiver (3) for receiving these pulses after having been affected by a Doppler modulation, and for supplying a reception signal which is constituted of video frequency pulses and bears the same modulation, storage and selection means (6) for isolating in this reception signal at least one group of recurrent video frequency pulses corresponding to a given distance window, spectrum analysis means (7) for generating from this group of pulses a signal which indicates the Doppler modulation frequencies of these pulses, a first threshold circuit (8) for discriminating these frequencies from noise and for delivering a signal ($S_1$) indicating the presence or absence of moving targets in the distance windows, and a display device (21) allowing the localisation of the targets, characterized in that it comprises a discriminator device (9) conceived to classify the detected targets according to their speed in a group of predetermined channels of relative danger, a second threshold circuit (10) connected to the discriminator circuit (9), to the synchronisation circuit (11) and to the first threshold circuit (8) and supplying signals corresponding to stationary targets ($S_3$), slowly moving targets ($S_4$) and quickly moving targets ($S_5$) respectively, a memorisation circuit (12) storing the output signals of the second threshold circuit (10), a synchronisation and control circuit (23) controlling the memorisation circuit, a fluorescent screen of the matrix type (21), a first group of electrodes (X) of this screen being controlled by a scan control circuit (22) which itself is controlled by the synchronisation circuit (23), and a second group of electrodes (Y) of this screen being controlled by the output signal of the memorisation circuit (12) thus allowing the localisation of the target and the distinction of those targets which present a higher degree of danger, by an overbrightness and a blinking on the screen (21).

2. A ground surveillance Doppler radar according to claim 1, characterized in that the discrimination device (9) comprises an analog-digital converter (101) receiving the output signal of the spectrum analyser (7) and supplying a digital signal to a first input (E) of a comparator (102), the second input (F) of which receives the preceding digital signal stored in a D-type flip-flop (103), this comparator supplying a signal by which a speed discriminator (105, 104, 106) can be activated, this discriminator having z output levels (z being an integer greater than 1), each level being connected to one input of a selector (107) which is able to select one out of z levels according to a predetermined danger criterium.

3. A ground surveillance Doppler radar according to claim 2, characterized in that the speed discriminator (105, 104, 106) comprises a counter (105) of capacity z, the output of which is applied to the input of a D-type flip-flop (104) receiving at its clock input the output signal of the comparator (102) and its output being applied to the input of a decoder (106) delivering z levels corresponding to z speed thresholds.

4. A ground surveillance Doppler radar according to any one of claims 1 to 3, characterized in that the second threshold circuit (10) comprises a shift register (24) conceived to store k successive informations and supplying on k parallel outputs the k first binary elements corresponding to one distance window, and that the second threshold circuit (10) comprises an adder (25) which is able to store these k first binary elements, synchronisation means (26, 28) for controlling the filling of the shift register and the adder, and means (30, 31) for selecting an output of the adder included between 2 and k and supplying the binary signal.

5. A ground surveillance Doppler radar according to any one of claims 1 to 4, characterized in that the memorisation circuit (12) comprises a group of active memories (14, 15, 16) the capacity of which depends on the size of the screen, each memory containing the informations relative to one danger channel for n distance windows and n air elevation values, a multiplexer (17) receiving sequentially the informations in parallel relating to each danger channel and delivering these informations serially for each danger channel.

6. A ground surveillance Doppler radar according to claim 5, characterized in that the number of danger channels is at least equal to three and that consequently, the number of active memories (14, 15, 16) is at least equal to three.

7. A ground surveillance Doppler radar according to claims 4 and 5, characterized in that the multiplexer (17) comprises a first AND gate (35), one input of which is connected.to the output of a first memory (16), the other input being connected to a clock (H3) via an inverter gate (36), a second AND gate (37), one input of which is also connected to the output of the first memory (16) and the other input is connected to the clock (H3), a NAND gate (40) one input of which is connected to the output of a second memory (14) and the other input of which is connected to the output of the first AND gate (35), a first OR gate (38) one input of which is connected to the output of the third memory (15) and the other input of which is connected to the output of the second AND gate (37), the output of the NOR gate (40) and of the OR gate (38) being each connected to one input (A, B) of a first selector (39), the output of which is connected to a first input (E1) of a second selector (33) via a second OR gate (41), a second input (E2) of the second selector (33) being connected to the output of the third memory (15) and a third input and a fourth input being connected to the output of the second AND gate, the output of said selector (33) being connected to the input of the shift register (19).

8. A ground surveillance Doppler radar according to claim 5, characterized in that the memorization circuit (12) comprises a logic circuit which is able to inhibit the write input of an active memory (14) in accordance with a control from outside (CE).

9. A ground surveillance Doppler radar according to any one of claims 1 to 8, characterized in that it comprises an interface circuit (18) including a shift register (19) which is serially filled with n incoming bits and supplies these n bits parallelly, and a group of n amplifiers each one connected to one output of the register (19) in order to adapt the signal applied to each electrode (Y) of the second group of electrodes.

10. A ground surveillance Doppler radar according to any one of claims 1 to 9, characterized in that a buffer memory (11) connects the threshold discriminator (10) to the memories (14, 15, 16) in order to realise a change in speed of the input informations.

Fig.1

Fig.2

S1

S2

101 CAN
102 E / F / E > F
103 D Q
104 D Q
105 compteur
106 Décodeur
107 Sélecteur

V0 < V
V1 < V
V2 < V
V3 < V

CV

0 080 397

Fig.3

Fig.4

0 080 397

Fig.5

0 080 397